# EUROPEAN PATENT APPLICATION

(11) **EP 1 600 849 A2**
(43) Date of publication of application: **30.11.2005**
(21) Application number: 05011376.0
(22) Date of filing: 25.05.2005
(51) Int. Cl.: G06F 3/033

(54) **Information input device**

(30) Priority: 26.05.2004 JP 2004156021
(71) Applicant: Pioneer Corporation, Meguro-ku, Tokyo (JP)
(72) Inventor: Tahara, Kazushi Oomori Koujou Pioneer Corp., Tokyo 143-8564 (JP)
(74) Representative: Popp, Eugen

(57) **Abstract**

It is an obj ect of the invention to perform an accurate position input having a directivity while at the same time ensuring a high resolution, or to perform a mode switchover operation for effecting a switchover among different functions in input information and for inputting information into a plurality of target apparatus, with an acceptable operability and without any incorrect input. The information input device (1) comprises: two plate-like input members (11,12) capable of being held between fingertips or portions of two fingers of one hand so as to be slid against each other; a grasping section (30) to be held by other fingers of the one hand; connecting portions (21,22) for connecting the two plate-like input members (11,12) to the grasping section (30); and an information creating portion for creating input information in accordance with a relative position or a relative movement between the plate-like input members (11,12). Furthermore, the grasping section (30) is provided with switchover operating means (31,32) for switching the mode of the input information, which is located at a position where it can be operated by one or both of the two fingers.

## Description

### BACKGROUND OF THE INVENTION

The present invention relates to an information input device.

In recent years, audiovisual equipment, electric household appliance, industrial apparatuses, and computers (PCs) have had remarkable development. In order to operate these information input devices, it is necessary to employ different information input means (for example, remote controller and mouse) for different devices, and to perform correct operations respectively suitable for different devices, hence resulting in an extremely complex situation for users. For example, a home may have many different electric devices such as television, PC, videocassette recorder, DVD player, radio, cassette CD player, and air conditioner. In order to input information into these electric devices, the number of remote controllers will be the same as that of electric apparatuses. Further, as may be understood only by taking television for an example, it is necessary to perform many different operations such as power ON/OFF, multi-channel switchover (effecting a switchover not only to a ground wave, but also to a satellite system such as BS and CS, as well as to a cable TV or the like), volume control, and screen adjustment, resulting in a situation more difficult for a user to handle.

Some information devices utilize graphical user interfaces (GUIs), whereas they are not always easy to use. Besides, appropriate information input devices (such as a pointing device) that have operational resolution comparable to the resolution of display units have not yet been put into practical use.

Take, for example, a mouse which is a typical pointing device for PC (Personal Computer) and the like. It requires a certain area of plate-like space such as a tabletop for operation, but cannot be operated freely if it is held in hand. Moreover, due to operations using wrist and elbow, the mouse is difficult to operate delicately and thus is far from being an information input device having a high operational resolution. A portable PC is often equipped with an information input device of touch panel type. The panel itself is fixed to the PC, however, and thus is poor in operation flexibility. In addition, since the touch-panel type device detects the position of as large an object as a finger (as employed herein, the term "finger" shall also means a thumb), the operational resolution is extremely poor. The feeling of friction at the fingertip might also be unpleasant.

Under such circumstances, there have been proposed various types of information input devices which have high operation flexibility and can be operated with fingertips while the bodies of the devices are held in hand.

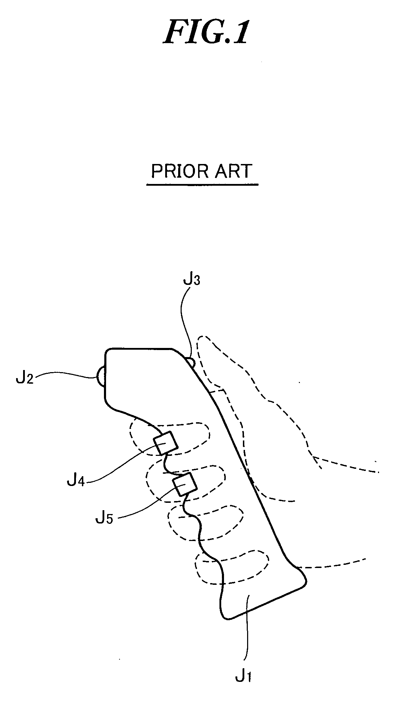

For instance, description will now be given to explain a conventional technique described in the publication of Japanese Utility Model Registration No. 3080102 with reference to Fig. 1. This wireless input device has a body J1, a transmission unit J2, a stick J3, and click buttons J4 and J5 which are attached thereto. The transmission unit J2 is intended to transmit PC operation data. The stick J3 is provided at a position where input operations can be performed with a finger.

Generally, the highest operational resolution among those of human operations can result from fingertips. In the foregoing conventional technique, however, the device body is held and fixed in hand so that operations are performed by single one finger. This configuration is thus not quite competent for fully utilizing the fine resolution of fingertips.

Namely, in the foregoing conventional technique, the front end of the stick J3 is put in contact with the side of the thumb, and the first and second joints of the thumb are bent or stretched for input operations. In fact, it is rather difficult to move only single one finger for operation, and it is impossible even for persons of dexterous hands to obtain a high operational resolution through such a single-fingered operations.

The conventional technique does provide a portability for the sake of an improved operation flexibility. Nevertheless, in view of such applications as a GUI pointing device, it has the problem that fine position inputs cannot be effected since it is impossible to obtain high operational resolution corresponding to a high-resolution or wide display screen. Another problem is that a single input unit (such as a stick) cannot be operated with a resolution as high as required for a number of types of information inputs, so that the types of information to input have to be reduced.

In the aforementioned conventional technique, single one input unit is operated in any optional direction so as to perform a position input on a GUI screen. However, the foregoing conventional information input device fails to perform an input of ahighresolution, in that even if position input is to be performed in only a specified direction, it is impossible to correctly operate the input unit in only such a direction, resulting in a problem that an input position is likely to deviate. In fact, such a problem is more likely to occur if an information input device is set at a higher detection sensitivity for the sake of an increased operational resolution.

Moreover, when only single one information input device is used to input information into a plurality of target apparatuses of various types having different functions, it is usual to have a mode switchover device or the like. However, when an additional input unit such as a mode switchover device or the like is provided separately in addition to the above-mentioned input unit, an input operation will became too complex. On the other hand, if an operational convenience is regarded as the most important aspect and too much attention is paid thereto, an incorrect input is likely to occur.

### SUMMARY OF THE INVENTION

The present invention has been accomplished in order to cope with the above-discussedproblems, and it is an obj ect of the invention to provide an information input device having an improved operational flexibility by virtue of an improved portability, and having a high operational resolution. For example, the present invention is to provide an information input device capable of performing a minute position input on a display screen having a high resolution and a large display area, even if the information input device is used as a GUI input device. In more detail, the present invention is to input various kinds of information by operating at only one simple input unit, to ensure a directivity for position input while at the same time ensuring a high resolution, and to perform a switchover operation for inputting information into a plurality of target apparatuses of various types having different functions, with an acceptable operability and without causing any incorrect input.

To achieve the foregoing object, an information input device of the present invention comprises at least the following features according to the following aspects.

According to the present invention, there is provided an information input device comprising: two plate-like input members adapted to be held between fingertips or portions of two fingers of one hand and capable of sliding against each other; a grasping section to be held by other fingers of said one hand; connecting portions for connecting the two plate-like input members to the grasping section; and an information creating portion for creating input information at least in accordance with a relative position or relative movement between the plate-like input members. In particular, switchover operating means for switching the mode of the input information is provided in the grasping section at one position thereof which allows the switchover operating means to be operated by one or both of said two fingers.

### BRIEF DESCRIPTION OF THE DRAWINGS

These and other objects and advantages of the present invention will become clear from the following description with reference to the accompanying drawings, wherein:
Fig. 1 is an explanatoryview showing a conventional technique;
Figs. 2A to 2C are explanatory views showing an information input device according to an embodiment of the present invention, Fig. 2A being a general view, Fig. 2B an explanatory view showing a state of operation, and Fig. 2C a sectional view of plate-like input members;
Figs. 3A to 3E are explanatory views showing switchover operating means of an information input device formed according to another embodiment of the present invention;
Fig. 4 is an explanatory view showing switchover operating means of an information input device formed according to another embodiment of the present invention;
Fig. 5A to 5C are explanatory views showing switchover operating means of an information input device formed according to another embodiment of the present invention;
Fig. 6 is a block diagram showing an electric restriction of an information input device formed according to another embodiment of the present invention;
Figs. 7A and 7B are explanatory views showing a mechanic restriction of an information input device formed according to another embodiment of the present invention;
Figs. 8A to 8D are explanatory diagrams showing an example of an information creating portion according to an embodiment of the present invention (a practical example of relative displacement detection using moiré fringes);
Figs. 9A to 9C are explanatory diagrams showing an example of the information creating portion according to the embodiment of the present invention (a practical example of pressure detecting means);
Fig. 10 is an explanatory view showing an example of the information creating portion according to the embodiment of the present invention (a practical example of tilt detecting means) ;
Figs. 11A and 11B are explanatory views showing the example of the information creating portion according to the embodiment of the present invention (the practical example of the tilt detecting means);
Fig. 12 is an explanatory view showing an example of the information creating portion according to the embodiment of the present invention (a practical example using a rotating ring);
Fig. 13 is an explanatory diagram showing an example of the information creating portion according to the embodiment of the present invention (an application example using various sensors); and
Fig. 14 is an explanatory view showing a practical example in which a grasping section is equipped with various accessories.

### DETAILED DESCRIPTION OF THE PREFERRED EMBODIMENTS

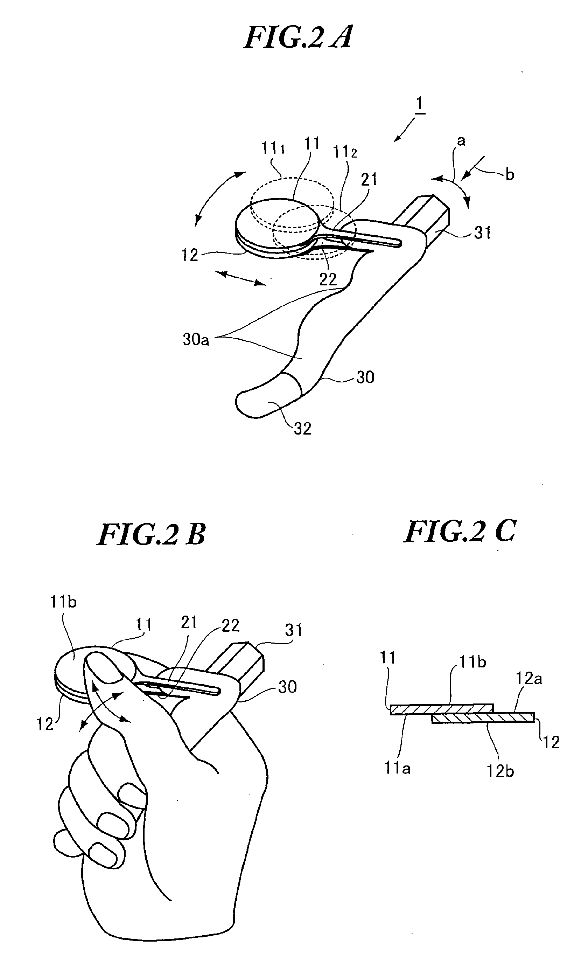

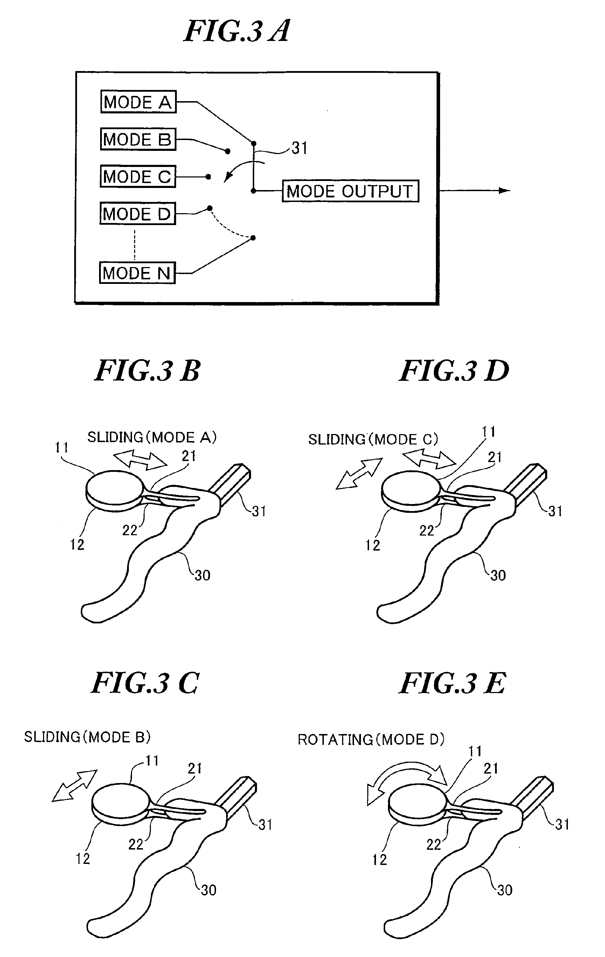

Hereinafter, embodiments of the present invention will be described with reference to the accompanying drawings. Figs. 2A to 2C are explanatory views showing an information input device formed according to an embodiment of the present invention. In more detail, Fig. 2A is a general view of the information input device, Fig. 2B is an explanatory view showing a state of an operation, and Fig. 3C is a sectional view of plate-like input members.

The information input device according to the embodiment of the present invention makes use of the following facts. That is, the highest resolution results from fingertip operations among all human operations. Besides, when a person holds an object between fingertips or portions of fingers, he or she can easily concentrate his or her attention on the fingertips or portions of fingers in particular. As a result, the object can be moved readily at the person's intention. The operations of holding an object between two fingertips or portions of fingers of one hand (such as the fingertip of a thumb and the top portion of a forefinger ahead of the second joint) and sliding them against each other are thus utilized for input operations using the information input device.

As shown in Figs. 2A and 2B, the information input device 1 according to the present embodiment of the present invention comprises two plate-like input members 11 and 12, a grasping section 30, connecting portions 21 and 22, and an information creating portion (not shown). The plate-like input members 11 and 12 can be slid against each other, and held between two fingertips or portions of fingers of one hand. The grasping section 30 is held with other fingers of the one hand. The connecting portions 21 and 22 connect the two plate-like input members 11 and 12 to the grasping section 30. The information creating portion creates input information in accordance with a relative position or relative movement between the plate-like input members 11 and 12.

Moreover, switchoveroperatingmeans (a mode switchover device 31) for switching the state of input information is provided at a pos ition which allows such switchover operating means to be operated by one or both of the two fingers staying around the grasping section 30. In practice, the mode switchover device 31 can be so formed that a mode switchover operation may be effected by rotating the switch 31 in a direction shown by an arrow a about an axis arranged in the longitudinal direction of the grasping section 30, or can be so formed that a mode switchover operation may be effected by pressing the switch 31 in a direction shown by an arrow b. Alternatively, the above two operations are combined with each other to form a desired mode switchover device. In addition, it is also possible to provide, at the lower end of the grasping section 30, another mode switchover device 32 which can be operated by another hand rather than the hand holding the grasping section 30.

According to the information input device 1 having such a basic configuration, the device itself is held by one hand at the grasping section 30. This provides the advantages of an improved operation flexibility and an improved operability. Moreover, since the plate-like input members 11 and 12 are held and slid against each other between the fingertips or portions of two fingers, the two plate-like input members 11 and 12 can be relatively slid in any directions including the directions of the arrows shown in Fig. 2A (for example, one plate-like input member 11 can be relatively slid against the other plate-like input member 12 as shown by the reference numerals 11₁ and 11₂). Such operations between two fingers make it possible to utilize the sliding operations of fingertips which are the highest in operational resolution among all human operations. In addition, the input operations can be performed in such a state that a person can easily concentrate his or her attention on the fingertips for high sensitivities.

According to the relative position or relative movement between the plate-like input members resulting from such input operations, the information creating portion then creates input information. The provision of this information creating portion allows, for example, fine position inputs on a high-resolution or wide display screen even when the information input device 1 is used as a GUI input device. When the input operations are divided into sub units to input respective different types of information, a number of types of information can be input through input operations as simple as sliding fingers against each other.

In this way, since the switchover operating means (the mode switchover device 31) for switching the state of input information is provided at a position which allows such switchover operating means to be operated by one or both of the two fingers staying around the grasping section 30, it is possible to obtain the following advantages. Namely, when the state of input information is to be changed, an operation necessary to be performed is only to separate the two fingers from the plate-like input member 11 to operate the mode switchover device 31, thereby making it possible to perform a switchover operation to switch the state of input information in a condition where the grasping section 30 is held by other fingers, thus ensuring an exact switchover through a simple operation.

As shown in Figs. 2B and 2C, the two plate-like input members 11 and 12 have slidable contact surfaces 11a and 12a opposed to each other, and contact surfaces 11b and 12b on their respective backsides. The contact surfaces 11b and 12b are intended for contact with the foregoing fingertips or portions of fingers. One contact surface 11b is so configured that it can get in contact with the side of a thumb. Further, if necessary, the contact surfaces 11b and 12b are provided with friction surfaces for avoiding a slip on the fingertips or portions of fingers. Moreover, the connecting portions 21 and 22 are provided so that they extend laterally from one side of the grasping section 30, while the mode switchover device 31 is provided to project from one end of the grasping section 30.

According to the above-described configuration, highly sensitive operations of sliding the side of a thumb and part of another finger against each other (the operations of moving the thumb relatively against the other finger as shown by the arrows of Fig. 2B) can be performed by the two plate-like input members 11 and 12 interposed therebetween. Inparticular, when the anti-slip friction surfaces are formed on the contact surfaces 11b and 12b, the input operations can be performed with the same sense of feeling as if the fingers are actually slid against each other. Moreover, a high-viscosity liquid such as grease can be put between the slidable contact surfaces 11a and 12b for smoother sliding and some sense of resistance, thereby allowing operations of still higher sensitivity. Further, since the mode switchover device 31 is protruding from one end of the grasping section 30, it is possible to use the thumb or use the thumb and other fingers to operate the mode switchover device 31. Moreover, since the operating of the mode switchover device 31 forces the plate-like input members 11 and 12 to be separated from fingers in order to perform an intentional operation, it is possible to prevent an incorrect operation when the state of input information is being switched over.

In the following, description will be given in more detail to explain the switchover operating means of the information input device 1 formed according to an embodiment of the present invention. One feature of the switchover operating means is that an information state (mode) to be switched over by a mode switchover device (which serves as switchover operating means) is an information state of input information in response tovarious directions. Here, the input information is created by a relative movement between the plate-like input members 11 and 12 in a specific direction.

As shown in Fig. 3A, the rotation (or pressing) of the mode switchover device 31 can perform a switchover among mode A, mode B, mode C, mode D, ... mode N (it is allowed to freely and optionally set the number of the modes to be switched), with a selected mode being outputted as desired. Actually, each of the respective modes is used to create information by detecting only a specific direction of a relative movement between the plate-like input members 11 and 12. For example, as shown in Figs. 3B to 3E, various modes may be set in a manner such that mode A is for creating information by detecting only the sliding of the plate-like input members 11 and 12 in a direction approaching the grasping section 30, mode B is for creating information by detecting only the sliding of the plate-like input members 11 and 12 in a direction perpendicular to that in mode A, mode C is for creating information by detecting only the sliding of the plate-like input members 11 and 12 in two directions, and mode D is for creating information by detecting a relative rotation between the plate-like members 11 and 12.

In this way, since information can be inputted by specifying an input direction with respect to an input operation of high resolution, it is possible to easily perform an input with a fixed direction. This proves to be effective when performing coordinate input of GUI where straight lines parallel to the X-axis or the Y-axis (the horizontal axis or the vertical axis on the screen) are drawn. Therefore, when it is possible to perform an input of high resolution, if a fine adjustment (corresponding to such a high resolution) is specified in only one direction, it is possible to simplify a fine adjustment for an input operation.

Another feature of the switchover operating means is that a state (mode) to be switched over by the switchover operating means can be in an information state corresponding to the types of functions of input information. Alternatively, a state (mode) to be switched over by the switchover operating means can be in an information state corresponding to the types of target apparatuses into which input information is inputted.

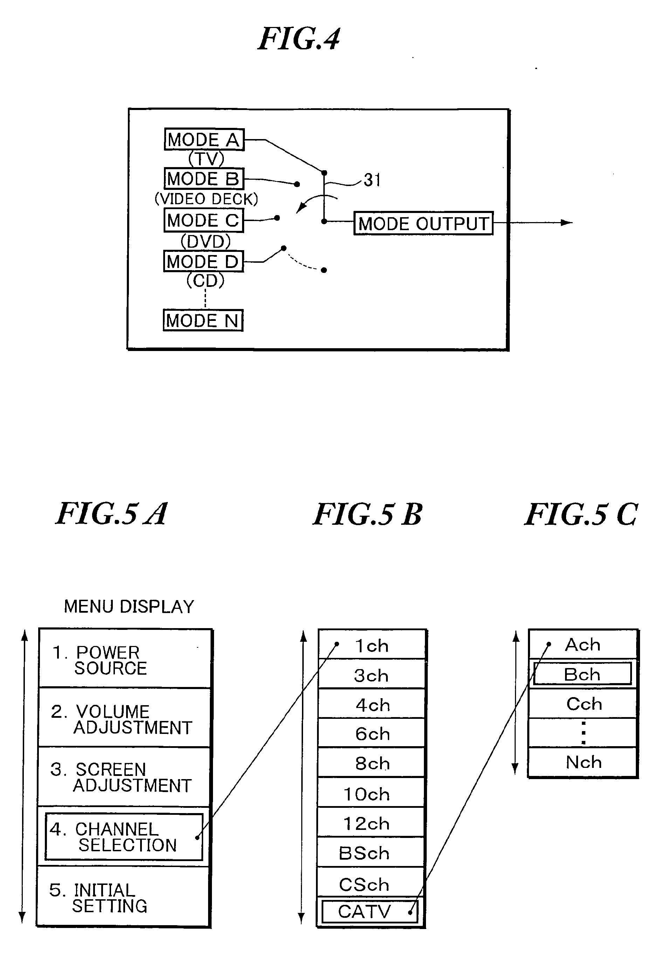

The present embodiment will be described still further with reference to Fig. 4 and Fig. 5. As shown in Fig. 4, various modes can be made corresponding to the types of target apparatuses (for example, mode A: TV; mode B: videocassette recorder; mode C: DVD recorder; mode D: CD player). In this way, it is possible to obtain a mode output selected by rotating the mode switchover device 31.

For example, when mode A is selected and a mode output corresponding to TV is obtained, the power source of television will be turned on and a TV program or the like will be outputted on a screen. Further, an operation menu list is displayed on the screen so that a mode switchover operation can be carried out. In the following, description will be given to explain an example in which the mode switchover device 31 is set at TV mode A so as to perform a channel switchover. As shown in Fig. 4, a predetermined signal is sent from TV mode A to effect a mode output, so that an operation menu list shown in Fig. 5A is displayed on the screen. Such an operation menu list includes "1: power source", "2: volume adjustment", "3: screen adjustment", "4: channel selection", and "5 : initial setting" , thus allowing one item tobe selected therefrom. Fig. 5A shows an example in which "4: channel selection" is selected. The sliding movement of the plate-like input members 11 and 12 at this time will be such that when an input position is moved in the upward and downward directions with respect to the screen during a sliding movement in a sliding direction shown in Fig. 3C to select an item from the menu list, an input position is selected in accordance with the selected item during the movement in the upward and downward directions and the plate-like input members 11 and 12 are slide in a direction perpendicular to the upward and downward directions (refer to Fig. 3B).

Once "4: channel selection" is selected from the operation menu list, a next operation menu list will be displayed as shown in Fig. 5B. At this time, an input position is moved upward and downward to search for a channel or a type of TV broadcast (BS, CS, CATV (cable TV), or the like) so as to select a desired item. At this time, the plate-like input members 11 and 12 are slide in a direction perpendicular to the upward and downward directions. Fig. 5B shows a condition in which CATV (cable TV) is selected and Fig. 5C shows a condition in which a desired channel (B-channel: Bch) is selected from a next operation menu.

In this way, since it is possible to use only one information input device 1 to operate a plurality of target apparatuses, it is allowed to dispense with the time and effort for managing many information input devices (such time and effort will be necessary if each target apparatus is equipped with one information input device 1). Furthermore, since the information input device 1 of the present invention is capable of utilizing mode switchover to input information into a plurality of apparatuses or a plurality of functions, such an information input device can be used as one having a high flexibility.

Next, description will be given to explain the connection portions 21 and 22 of the information input device 1 formed according to an embodiment of the present invention. Here, although the connecting portions 21 and 22 are connected with the grasping section 30 in a manner such that the two plate-like input members 11 and 12 are slidable relative to each other, these connecting portions 21 and 22 are provided to extend laterally from one end of the grasping section 30, thereby ensuring a structure such that the connecting portions 21 and 22 have a desired flexibility or elasticity.

By using the above structure, the two pieces of plate-like input members 11 and 12 can be slide freely relative to each other or in a condition involving a desired restriction, and will not be separated from each other even if two fingers holding the plate-like input members 11 and 12 are separated from them. Therefore, the two fingers, even after being separated from the plate-like input members 11 and 12, are allowed to immediately return back to their input operating positions, thereby ensuring a high operability.

Moreover, the connecting portions 21 and 22 can be constructed in a manner such that when the grasping section 30 is held by one hand, the two pieces of the plate-like input members 11 and 12 may be kept at positions in which they can be held by two fingers. In this way, using only one hand in a naturally grasping manner, it is possible to grasp the grasping section 30 with one hand and to hold the plate-like input members 11 and 12 between two fingers, thereby ensuring an easy operation. Besides, even after the two fingers holding the plate-like input members 11 and 12 are separated therefrom while the grasping section 30 is still held by one hand, it is possible for the fingers to immediately return back to their operating positions as described above. In addition, since the mode switchover device 31 is provided in a position easy for two fingers to operate, it is possible for an input operation as well as a mode switchover operation to have a high operability.

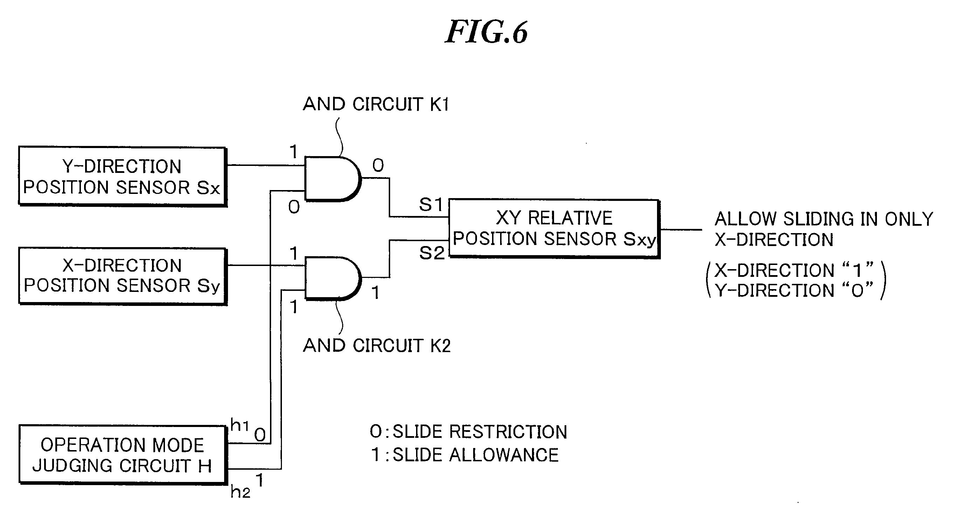

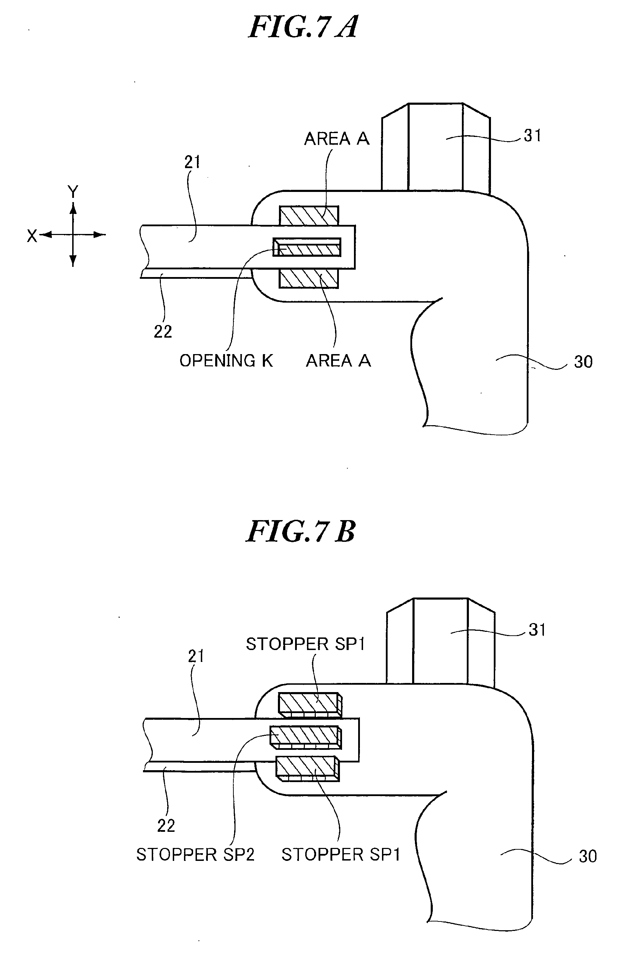

Next, description will be given to explain methods according to embodiments of the present invention, showing that a sliding in a specific direction is restricted and mode switchover is performed. In fact, methods of restricting a sliding in a specific direction may be an electric method for electrically restricting a sliding, and a mechanic method for mechanically restricting the sliding, which will be described respectively with reference to Fig. 6 (electric restriction) and Fig.7 (mechanic restriction). However, Fig. 6 and Fig. 7 only show two examples for restricting a sliding in a specific direction, and the present invention should not be limited to such two methods.

An electric control circuit shown in Fig. 6 comprises an X-direction position sensor Sx for producing a signal indicating a sliding in X direction (which is one specific direction), Y-direction position sensor Sy for producing a signal indicating a sliding in Y direction (which is orthogonal to X-direction), and an operation mode judging circuit H for receiving a signal from the mode switchoverdevice 31 andproducinga control signal. Further, an AND circuit K1 and an AND circuit K2 receive signals from the X-direction position sensor Sx, Y-direction position sensor Sy, and the operationmode judging circuit H, calculate logical products, and output signals representing calculation result to an XY relative position sensor Sxy. Here, the XY relative position sensor Sxy produces a slid restriction signal (or a slid allowance signal) in one or both of the X-direction and the Y-direction, by virtue of the received signals.

For instance, similar to an example shown in Fig. 3B, there is an example of restricting a slid in onlyone direction (X-direction). The operation mode judging circuit H which has received a slide allowance in only X-direction from the mode switchover device 31 will produce "0" (slide restriction) through its output h1 (connected with the AND circuit K1), and produce "1" (slide allowance) through an output h2 (connected with the AND circuit K2). The X-direction position sensor Sx and the Y-direction position sensor Sy constantly produce "1" (slide allowance) to the AND circuit K1 and the AND circuit K2. The AND circuit K1 receives "0" from the output h1 of the operation mode judging circuit H and "1" outputted from the Y-direction position sensor Sy and outputs "0" (slide restriction) by virtue of a logical product. Moreover, AND circuit K2 receives "1" from the output h2 of the operation mode judging circuit H and "1" outputted from the X-direction position sensor Sx and outputs "1" (slide allowance) by virtue of a logical product.

In this way, the XY relative position sensor Sxy receives "0" (slide restriction) from an input s1 (connected with the AND circuit K1), outputs a signal for restricting a slide in Y-direction, receives "1" (slide allowance) from an input s2 (connected with the AND circuit K2) and outputs a signal allowing a slide in X-direction. For example, the connecting portions 21 and 22 having received these signals are restricted in their sliding movements, and restricted in a manner such that no sliding can be effected in a direction (Y-direction) which is not the specific direction. As a result, only a slid in the specific direction (X-direction) is allowed.

Therefore, by using the above-described constitution, the AND circuits K1 and K2 having received signals from the X-direction position sensor Sx, the Y-direction position sensor Sy and the operation mode judging circuit H will perform calculation, and send signals to the XY relative position sensor Sxy. Accordingly, the XY relative position sensor Sxy send control signals (slide restriction, slide allowance) to the connecting portions 21 and 22, thereby electrically restricting a slide in any directions other than a specific direction and performing a mode switchover.

Next, description will be given with reference to Figs. 7A and 7B which are explanatoryviews showing that a sliding in a specific direction is mechanically restricted. Fig. 7A is an enlarged view showing a juncture between the connecting portions 21, 22 (when there is no restriction to sliding movement, i.e., during normal sliding movement) and the grasping section 30. At this time, the connecting portions 21 and 22 are allowed to slide in one direction (X-direction in the drawing) approaching or moving away from the grasping section 30 of the plate-like input members 11, 12 and also to slide in a direction (i.e., Y- direction in the drawing) orthogonal to X-direction. Here, an area A and an opening K are provided in the juncture between the connecting portions 21, 22 and the grasping section 30.

Specifically, the area A is disposed to cover both ends of each connecting portion in Y-direction so as to restrict the movement of the connecting portion in Y-direction. At the time of slide restriction, a stopper SP1 rises to emerge from inside the grasping section 30 in the area A, fixes the connecting portion from both ends thereof, thereby restricting the movement of the connecting portion in Y-direction. In practice, the stopper SP1 can have any configuration without having to receive any restriction in its shape, provided that it can prevent the movement of a connecting portion in Y-direction. On the other hand, at the time of normal sliding, since the stopper SP1 remains within the grasping section 30 in the area A, the movement of the connectingportion will not be hampered in Y-direction.

The opening K is formed in each connecting portion itself for restricting the movement thereof in X-direction. At the time of slide restriction, a stopper SP2 rises to emerge from inside the grasping section 30 in the opening K, fixes the connecting portion by fully or partially filling the opening K, thereby restricting the movement of the connecting portion in X-direction. Similarly, the stopper SP2 can have any configuration without having to receive any restriction in its shape, provided that it canprevent the movement of a connecting portion in X-direction. On the other hand, at the time of normal sliding, since the stopper SP2 remains within the grasping section 30 in the opening K, the movement of the connecting portion will not be hampered in X-direction.

Fig. 7B is an enlarged view showing an example in which a slide restriction is effected. At this time, the stoppers SP1 and SP2 rise to emerge in the area A and in the opening K, thereby fixing the connecting portions 21, 22 and thus restricting the movement thereof in either one or both of X, Y directions. Incidentally, Fig. 7B also shows an example in which the movements in both of X, Y directions are simultaneously restricted (at this time, both of the stoppers SP1 and SP2 appear).

In this way, by providing the stoppers SP1 and SP2 which fix the connecting portions 21 and 22, it is possible to mechanically restrict the sliding movements of the connecting portions 21, 22 and to perform mode switchover.

Hereinafter, description will be given to explain examples of the information creating portion for creating the input information in accordance with the relative position, the relative movement, or the like between the plate-like input members 11 and 12 described above.

One of the examples of the information creating portion is relative displacement detecting means (sensor) for detecting a relative displacement between the plate-like input members 11 and 12. When the information input device according to the embodiment of the present invention is used as a GUI input device, it can desirably input position information with precisions of the order of the resolution of currently-prevailing display units (approximately one thousand dots) for the sake of high pointing capability (capability for inputting position information). Meanwhile, the information input device 1 according to the embodiment of the present invention utilizes the relative displacement between fingers, and thus has a rather narrow range of displacement (the narrow range is even desirable interms of anoperability). Therefore, the minimum unit of resolution of the relative displacement between the plate-like input members 11 and 12 can fall to or below 10 micrometers.

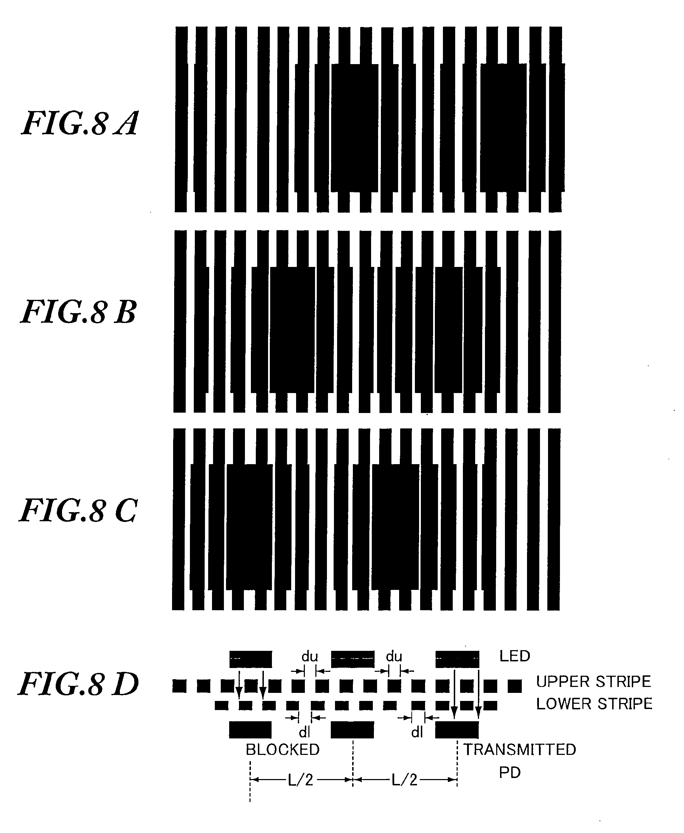

For one of the methods of detecting such a small relative displacement between the two plate-like input members 11 and 12, Figs. 8A to 8D show an embodiment of relative displacement detection by using moiré fringes. As is well known, moiré fringes originally refer to a wave pattern occurring from mutually overlapped layers of fine meshes such as silk fabric. This phenomenon can be utilized to show minute displacements as changes of the wave pattern in a far greater scale, which is effective for the embodiment of the present invention where fine displacement detection is required.

The relative displacement sensor of this practical example comprises two film-like sheets, each of which has light transmitting areas and light blocking areas arranged alternately in stripes. These sheets are arranged on the targets of the displacement detection, i.e., on the slidable contact surfaces 11a and 12a of the upper and lower plate-like input members 11 and 12, respectively. Getting the above sheets therebetween, light-emitting devices (LEDs) and photodetectors (PDs) are arranged on the inner sides of the upper and lower plate-like input members 11 and 12, respectively (see Fig. 8D; the light transmitting areas are shown in white, and the light blocking areas are in black). In each of the sheets, the transmitting areas and the blocking areas of the stripes have the same width. The stripes on the upper sheet (upper stripes) shall have a width of du, and those on the lower sheet (lower stripes) have a width of dl.

Next, description will be given to explain the operation of this practical example. Figs. 8A to 8C show the two striped sheets overlapped with each other, as viewed from above (the upper and lower sheets are slightly different from each other in stripe width) . Here, for the sake of easy understanding, the lower sheet is shown in a smaller height. Since the diagrams are solely intended to visualize the moiré phenomenon, the positional relationship is not consistent with Fig. 8D. Now, when the upper sheet in the state of Fig. 8A moves to the left (in relative terms, the same as if the lower sheet moves to the right) as much as the width of a stripe, the moiré fringes resulting from the overlap change as shown in Figs. 8B and 8C. For example, in the case of the leftmost photodetector (PD), the light transmitting state (Fig. 8A) changes to the semi-transmitting state (Fig. 8B), and further changes to the blocking state (Fig. 8C). That is, the output current of the photodetector PD decreases gradually from the ON state where a maximum current flows to the OFF state where no current flows. Moreover, when the upper sheet moves further to the left as much as the stripe width, then the output current changes from the OFF state to the ON state.

Accordingly, the number n of changes of this current (ON to OFF, OFF to ON) can be counted to calculate the distance of displacement as (the stripe width of the sheet) x (the number n of changes of the current). For example, given the stripe width is 10 micrometers, it is possible to detect the amount of displacement in units (precisions) of 10 micrometers.

In order to detect the direction of the movement, right or left, apart from the amount of displacement, three pairs of light-emitting devices (LEDs) and photodetectors (PD) are arranged as shown in Fig. 8D. Here, the state of the PD at the center (either ON state or OFF state) is compared with the ON/OFF states of the PDs on the right and left before a change. Then, the direction of movement, right or left, is determined depending on which PD had the same state. Incidentally, the interval L of the moiré fringes is inversely proportional to a difference between the widths du and dl of the upper and lower stripes, or given by L = du·dl/|du - dl|. The three pairs of photodetectors and light-emitting devices are arranged at half the interval which is L/2.

The foregoing description has dealt with the detection as to one direction (referred to as X-axis). Similarly, the movement in the orthogonal direction (referred to as Y-axis) can also be detected by arranging the foregoing three pairs of light-emitting devices and photodetectors in the Y-axis direction.

Up to this point, description has been given to explain the method of detecting a relative displacement by using moiré fringes. However, the method of the present invention should not be limited to the foregoing one, as long as it can detect the relative displacement. Forexample, a thin film resistor sensor and a magnetic scale may be used as the relative displacement detecting means since they have resolutions and can be formed in a thin sheet.

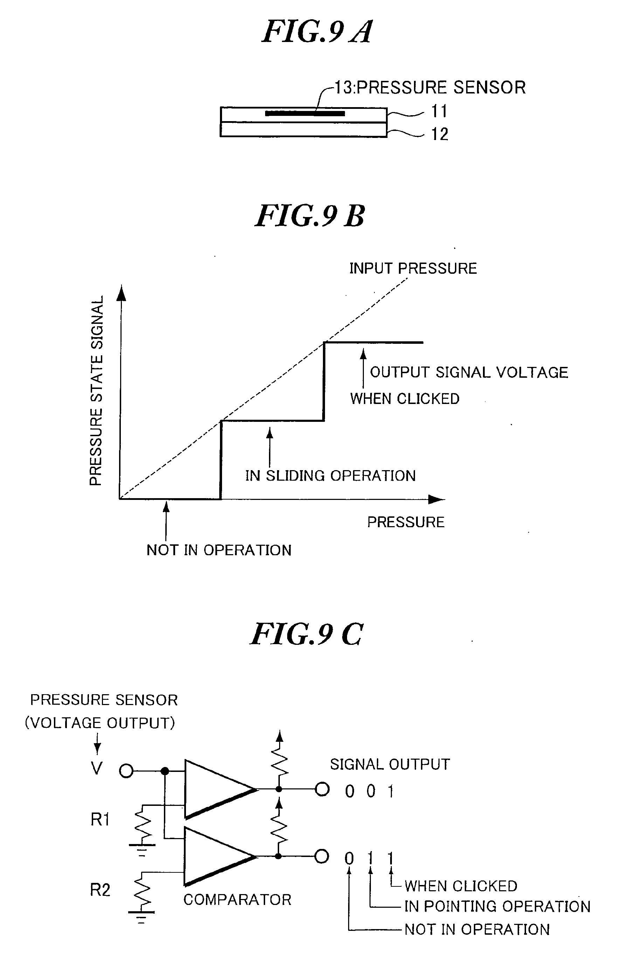

Next, referring to Figs. 9A to 9C, description will be given to explain an example where the information creating portion is constituted by pressure detecting means (sensor). In the example shown in Fig. 9A, the upper plate-like input member 11 is provided with pressure detecting means (sensor) 13. In another example, however, the lower plate-like input member 12 may be provided with the pressure sensor 13. Moreover, both the plate-like input members 11 and 12 maybeprovidedwithapluralityof sensors each. Inaddition, for the sake of click feeling, spring structures may also be arranged.

One of the purposes of this pressure sensor 13 is to provide a function equivalent to a so-called mouse click (the function of instructing an input at that cursor location). This operation can be effected by applying a finger pressure higher than that for slide operations in a short time.

Moreover, the pressure sensor 13 may be a piezoelectric sensor, for example. In this case, as shown in Fig. 9B, the pressure sensor 13 is provided with the function of detecting an analog voltage signal corresponding to the finger pressure, and discriminating it among three pressure states of "not in operation," "in slide operation," and "when clicked." The purpose of this additional function, apart from the click function, is to outwardly transmit the signal from the relative displacement detecting means only when inoperation (slide operation). Here, apressureformedwhena finger is put on the plate-like input member 11 to slide the same and a pressure formed when not in operation are discriminated, and the foregoing signal from the relative displacement detecting means is interrupted when not in operation.

Fig. 9C shows an example of the circuit for this purpose. The circuit is composed of resistors R1 and R2, and two comparators. The resistors R1 and R2 can be adjusted to optimize the discrimination between the pressures of the non-operation state and the slide-operation state, as well as the discrimination between the pressures of the slide-operation state and the clicked state. ONs and OFFs of the two outputs are then combined to finally identify the three states, which can be used for such purposes as the foregoing click detection and the control on the transmission of the relative displacement detection signal. It is understood, however, that such a circuit need not necessarily be used. For example, the output voltage of the pressure sensor may be AD-converted before the three pressure states are discriminated digitally.

The relative displacement detecting means and the pressure detecting means described above can provide a position information inputting function and a click function in terms of mouse functions. In addition, a tilt sensor to be described below may be used to provide the function of distinguishing right and left mouse clicks.

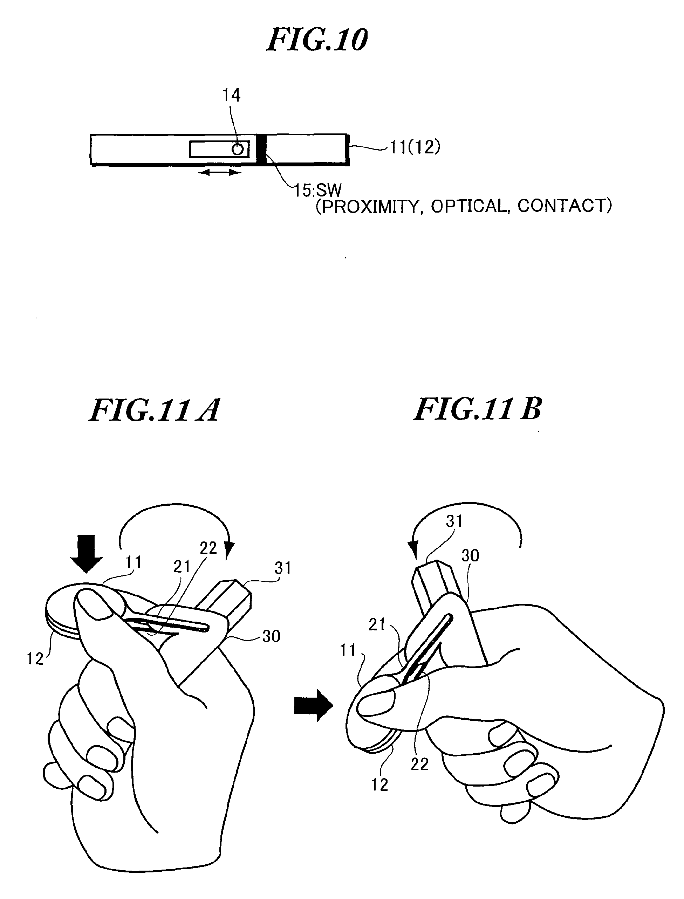

Figs. 10 to 11B show a practical example in which the plate-like input member 11 (12) is provided with tilt sensing means (sensor) for sensing the tilt of the input members in a certain direction. In this example, the tilt sensor is made of a ball 14 and a switch 15. This switch 15 may be a proximity switch, an optical switch, a contact switch, or the like. The provision of this sensor makes it possible to detect a right or left tilt of the information input device which is held in hand, for example. A tilt signal indicating an actual tilt can be combined with a click signal detected by the foregoing pressure sensor at that time, thereby allowing inputs corresponding to so-called right and left clicks of a two-button mouse.

Figs. 11A and 11B show the input operations. As shown in Fig. 11A, the plate-like input members 11 and 12 are tilted to the right and a click operation (short-time application of a pressure higher than in slide operation) is effected to perform a right click. As shown in Fig. 11B, the plate-like input members 11 and 12 are tilted to the left and a click operation is effected to perform a left click.

It is understood that two pressure detecting sensors may be arranged, for example, on the right and left of the plate-like input member 11, respectively. Here, a difference between the finger pressures on the right and left sensors can be detected to identify right and left clicks. In another practical example, a plurality of pressure sensors or a large-area pressure sensor having a plurality of detection subareas may be adopted and configured to detect the states of pressures continuously. Then, two-dimensional cursor movements can be controlled depending on the selection of the detection subareas and the pressing force.

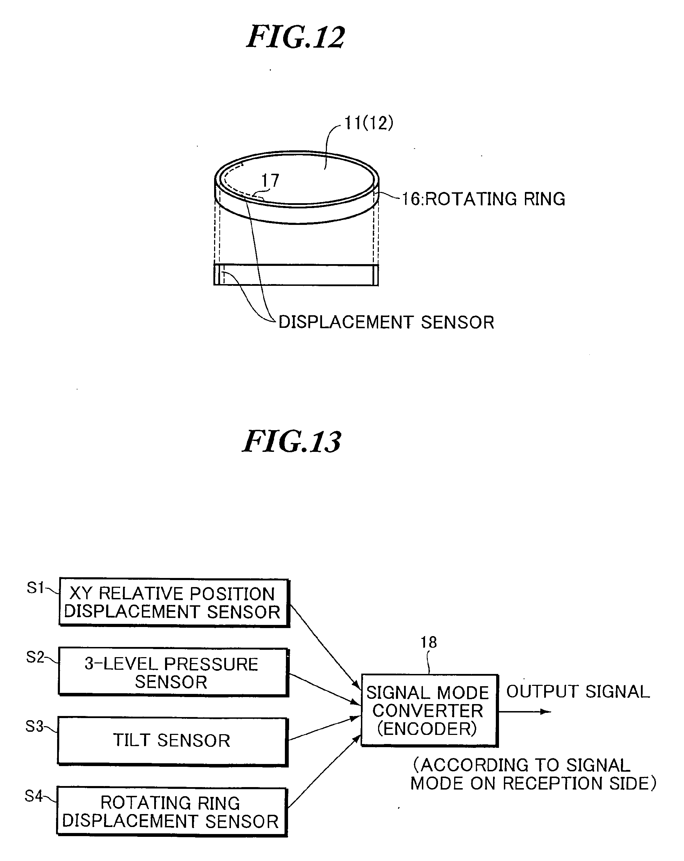

Now, referring to Fig. 12, description will be given to explain a practical example involving a movable member which moves in a one-dimensional fashion. In this example, a rotating ring 16 capable of rotation is arranged around the plate-like input member 11 (12) . This rotating ring 16 is configured so that it can rotate around this plate-like input member 11 (12), while a one-dimensional displacement sensor 17 for detecting a relative displacement between this rotating ring 16 and the plate-like input member 11 (12) is interposed between the rotating ring 16 and the plate-like input member 11 (12). The rotational displacement of the rotating ring 16 is thus detected, and a signal corresponding to the rotational displacement is output. That is, since this rotating ring 16 can be adjusted in position to output the corresponding signal to an external area, it canplaythe role of such units as a volume controller of a target device as well as a center roller of a mouse.

Fig. 13 is a block diagram showing how detection signals from the various sensors (S1 to S4)described above are integrated by a signal mode converter (encoder IC) 18, converted into a signal output suitable for the signal mode (such as USB signal) of an information input target device, and outputted to an external area.

As has been described, in the information input device according to the embodiments of the present invention, the information creating portion is not limited to the configuration of the foregoing examples but may employ various configurations. The embodiments of the present invention, irrespective of the configuration of the information creating portion, comprise the following components: the two plate-like input members 11 and 12 capable of being held between fingertips or portions of fingers of one hand so as to be slidable against each other; the grasping section 30 to be held by other fingers of the one hand; and the connecting portions 21 and 22 for connecting the plate-like input members 11 and 12 to the grasping section 30. Here, an important feature is that the input information is createdat least in accordance with the relative position or relative movement of the plate-like input members 11 and 12. Therefore, the embodiments of the present invention provide an improved portability for an improved operation flexibility, and utilize the keen senses and excellent resolution of human fingers to effect fine position inputs. Further, various kinds of information can also be inputted through simple operations on the input members.

On the other hand, the information creating portion may also be driven by an energy source such as a battery (including a solar battery) which is arranged in either one or both of the plate-like input members 11 and 12. Alternatively, an energy source may be arranged in the grasping section 30 so that the information creating portion is driven via the connecting portions 21 and 22 if they are conducive or wired inside.

Next, description will be given to explain the grasping section 30. As shown in Figs. 2A and 2B, the grasping section 30 is made of a bar-like member having a length capable of being held in the palmofonehand. Agrip (a portion patterned to the shapes of fingers) 30a may be formed if necessary. Then, the connecting portions 21 and 22 are arranged on one end of the grasping section 30, so that the plate-like input members 11 and 12 can be operated with two fingers (for example, a thumb and a forefinger) with the grasping section 30 gripped by one hand as shown in Fig. 2B.

By providing the grasping section 30, it is possible for such grasping section to contain a battery or other energy sources, as well as electric circuits such as a radio or optical wireless transmitter for transmitting signals to the target device for the information input, as described above. Moreover, the grasping section 30 can be gripped to hold the plate-like input member 11 and 12 at a certain position, so that the directions of movement of the plate-like input members 11 and 12 can be easily recognized. This also yields the advantage of higher operation stability.

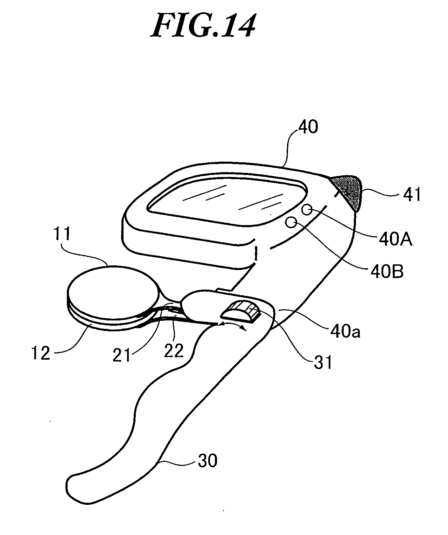

As shown in Fig. 14, the grasping section 30 may also be equipped with various accessories. In the shown example, a small-sized display unit 40 is attached to the grasping section 30. Here, the display unit 40 is provided with a signal transmission unit 41 and auxiliary indicator devices 40A and 40B. The display unit 40 is so configured that it can be detachably attached to the front end of the grasping section 30 via a connector 40a. With this display unit 40, it is possible to concentrate an operator's attention on the hand alone even during GUI operations, thereby ensuring such advantages as improved operability and higher operation accuracies. Besides, in the cases of inputting information to an apparatus having no display unit, such as an air conditioner, this display unit 40 can be utilized to show operation menus for information input. Moreover, when the information input device is used as a controller of a TV set or an image recording and reproducing apparatus, it is possible to perform a program selection, a video recording preset, and other operations not showing operation menus on the screen of the apparatus itself. This makes it possible to input information without disturbing a program which is being currently enjoyed. In this way, in case where accessories are attached to an end of the grasping section 30, it is allowed to provide a mold switchover device 31 on the upper side of the grasping section 30, as shown in Fig. 14. In the example shown in Fig. 14, the switch is a dial-type device which can be rotated by a thumb in directions shown by arrows in the drawing, thereby effecting the above-mentioned mode switchover operation.

As has been described, according to the information input devices of the embodiments of the present invention, it is possible to provide an information input device which has an improved portability for the sake of improved operation flexibility, and has a high operational resolution as well. Further, it is also possible to provide an information input device which allows fine position inputs on a high-resolution or wide display screen when used as a GUI input device in particular. Moreover, the information input device, when used as other input devices, can input various types of information through simple operations.

Another effect of the present invention consists in that relative movements between fingers, which are delicate and high in operational resolution, can be sensed by the sensors having a sufficient position sensitivity so that both large movements and small movements can be smoothly converted into information for output. Moreover, since the detecting functions corresponding to several types of operations including fingertip operations and wrist operations are available, a number of types of information can be input without switching devices.

Furthermore, the provision of the grasping section 30 allows stable operations. Since the grasping section 30 is held in hand and the plate-like input members 11 and 12 are operated with relative movements between fingers, it is possible to sense the current position without visually checking it. Therefore, in such cases as a GUI input, the operability improves significantly since eye movements to the hand become unnecessary.

The grasping section 30 is provided with switchover operating means for switching the mode of the aforementioned input information, which is located at a position where it can be operated by one or both of the two fingers operating the plate-like input members 11 and 12. Therefore, if each mode is rendered corresponding to each direction of input information created by a relative movement in a specific direction among all relative movements of the plate-like input members, it is possible to perform an accurate position input having a directivity while at the same time ensuring a high resolution. Furthermore, it is possible to perform a mode switchover operation for effecting a switchover among different types of functions in input information and for inputting information into a plurality of target devices, with an acceptable operability and without any incorrect input.

While there has been described what are at present considered to be preferred embodiments of the present invention, it will be understood that various modifications may be made thereto, and it is intended that the appended claims cover all such modifications as fall within the true spirit and scope of the invention.

## Claims

1. An information input device (1) comprising:
two plate-like input members (11,12) adapted to be held between fingertips or portions of two fingers of one hand and capable of sliding against each other;
a grasping section (30) to be held by other fingers of said one hand;
connecting portions (21,22) for connecting the two plate-like input members (11,12) to the grasping section (30); and
an information creating portion for creating input information at least in accordance with a relative position or relative movement between the plate-like input members (11,12),
wherein switchover operating means (31,32) for switching the mode of the input information is provided in the grasping section (30) at one position thereof which allows the switchover operating means (31,32) to be operated by one or both of said two fingers.

2. The information input device (1) according to claim 1, wherein:
the twoplate-like input members (11,12) have slidable contact surfaces (11a,12a) opposed to each other, and contact surfaces (11b,12b) on the respective backsides thereof for the fingertips or portions of the fingers to make contact with;
one of the contact surfaces of the plate-like input members (11,12) is capable of making contact with a side of a thumb, said connecting portions (21,22) are provided to extend laterally from an end portion of the grasping section (30), while said switchover operating means (31, 32) is provided on said endportion of the grasping section (30).

3. The information input device (1) according to claim 1 or 2,
wherein information mode to be switched by the switchover operating means (31,32) is an information mode corresponding to each direction of an input information created by a relative movement in a specific direction among relative movements between the plate-like input members (11,12).

4. The information input device (1) according to any one of claims 1 to 3, wherein information mode to be switched by the switchover operating means (31,32) is an information mode formed based on either mutually orthogonal two directions or rotating direction among relative movements between the plate-like input members (11,12).

5. The information input device (1) according to any one of claims 1 to 4, wherein information mode to be switched by the switchover operating means (31,32) is an information mode corresponding to the type of function of input information.

6. The information input device (1) according to anyone of claims 1 to 5, wherein information mode to be switched by the switchover operating means (31,32) is an information mode corresponding to the type of a target apparatus into which input information is inputted.

7. The information input device (1) according to anyone of claims 1 to 6, wherein the information creating portion has pressure detecting means (13) for detecting a pressing force applied on the plate-like input members (11,12), and creates input information in accordance with an output of the pressure detecting means (13).

8. The information input device (1) according to claim 7, wherein the pressure detecting means (13) creates input information in accordance with the level of a pressure applied on the plate-like input members (11,12).

9. The information input device (1) according to anyone of claims 1 to 8, wherein the information creating portion has tilt detecting means for detecting a tilt of the plate-like input members (11, 12), and creates input information in accordance with an output of the tilt detecting means.

10. The information input device (1) according to any one of claims 1 to 9, wherein the information creating portion has a rotating ring (16) for rotating around an outer periphery of the plate-like input members (11,12), and detecting means (17) for detecting a relative rotation of the rotating ring (16) with respect to the plate-like input members (11,12), and creates input information in accordance with an output of the detecting means (17).
